(19) Europäisches Patentamt
European Patent Office
Office européen des brevets

(11) Numéro de publication: **0 278 839 B1**

(12) # FASCICULE DE BREVET EUROPEEN

(45) Date de publication du fascicule du brevet: **19.12.90**

(51) Int. Cl.⁵: **B01J 29/06**, C10G 11/05

(21) Numéro de dépôt: **88400186.8**

(22) Date de dépôt: **28.01.88**

(54) **Catalyseur de craquage de charges hydrocarbonées comprenant une offrétite, une zéolithe et une matrice.**

(30) Priorité: **11.02.87 FR 8701802**
**30.11.87 FR 8716691**

(43) Date de publication de la demande:
**17.08.88 Bulletin 88/33**

(45) Mention de la délivrance du brevet:
**19.12.90 Bulletin 90/51**

(84) Etats contractants désignés:
**AT BE DE GB IT NL SE**

(56) Documents cités:
**EP-A- 0 020 154**
**EP-A- 0 163 449**
**EP-A- 4 568 655**
**FR-A- 2 251 615**
**FR-A- 2 575 741**

(73) Titulaire: **INSTITUT FRANCAIS DU PETROLE, 4, Avenue de Bois-Préau, F-92502 Rueil-Malmaison(FR)**

(72) Inventeur: **Marcilly, Christian, 91 ter rue Condorcet, F-78800 Houilles(FR)**
Inventeur: **Deves, Jean-Marie, 75, rue des Bons Raisins, F-92500 Reuil Malmaison(FR)**
Inventeur: **Raatz, Francis, 17, rue Michelet, F-92500 Rueil Malmaison(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention concerne un catalyseur de conversion de charges hydrocarbonées comprenant une zéolithe à structure ouverte, associée à une offrétite stabilisée et désaluminée et à une matrice amorphe ou mal cristallisée.

Le catalyseur de la présente invention est particulièrement bien adapté au craquage de fractions pétrolières en vue de produire une quantité importante de propylène, et en particulier au craquage de fractions pétrolières lourdes.

La présente invention concerne également le procédé de craquage de charges pétrolières, en particulier de charges pétrolières lourdes, en présence du catalyseur défini ci-avant, ainsi que les procédés de préparation dudit catalyseur.

L'introduction du procédé de craquage catalytique dans l'industrie pétrolière à la fin des années 1930 a constitué un progrès déterminant par rapport aux techniques existantes, en permettant l'obtention de rendements très améliorés en essence pour automobile de qualité très supérieure. Les premiers procédés fonctionnant en lit fixe (procédé HOUDRY par exemple) ont rapidement été supplantés par les procédés en lit mobile et surtout depuis le milieu des années 1940 par ceux en lit fluide (EEC ou Fluid Catalytic Cracking). Au tout début de leur utilisation, les procédés de craquage catalytiques traitaient presque exclusivement des Distillats Sous Vide (DSV) pauvres en soufre et relativement légers (point d'ébullition final inférieur à 540-560).

Le craquage de ces charges est généralement réalisé vers 500°C à une pression totale voisine de la pression atmosphérique et en l'absence d'hydrogène. Dans ces conditions, le catalyseur se recouvre rapidement de coke et il est nécessaire de procéder constamment à sa régénération. Dans les procédés de craquage en lit fluide (FFC) ou en lit mobile (tel que le TCC), le catalyseur circule en permanence entre la zone réactionelle où il réside pendant un temps de l'ordre de plusieurs secondes à plusieurs dizaines de secondes, et le régénérateur où il est débarassé du coke par combustion entre 600 et 750°C environ en présence d'oxygène dilué. Les unités à lit fluide (FFC) sont maintenant beaucoup plus répandues que celles à lit mobile. Le catalyseur y circule à l'état fluidisé sous forme de petites particules de diamètre moyen compris entre $50.10^{-6}$ et $70.10^{-6}$ m, la granulométrie de cette poudre s'étalant approximativement entre $20.10^{-6}$ et $100.10^{-6}$ m.

Les catalyseurs utilisés dans les premières unités FCC construites étaient des solides riches en silice obtenus soit par traitement acide d'argiles naturelles, soit des silice-alumines synthétiques. Les principaux progrès enregistrés en FCC jusqu'à la fin des années 50 ont été entre autres :

- l'utilisation de la technologie d'atomisation ("spray drying") permettant de préparer les catalyseurs sous forme de fines particules sphériques plus facilement fluidisables et plus résistantes à l'attrition que les poudres obtenues par broyage,
- la synthèse de silice-alumines synthétiques, tout d'abord riches en silice "low Alumina" ou Lo-Al à environ 85 % poids de silice puis plus riches en alumine ("High Alumina" ou Hi-Al à environ 75 % poids de $SiO_2$),
- et diverses améliorations très importantes dans les domaines de la métallurgie et de la conception des équipements utilisés, notamment au niveau de la régénération.

C'est au début des années 1960 qu'est intervenue une percée majeure dans le domaine du craquage catalytique, avec l'utilisation des tamis moléculaires et plus précisément des zéolithes de structure faujasite, tout d'abord dans le procédé à lit mobile, puis un peu plus tard, dans le FCC. Ces zéolithes, incorporées dans une matrice constituée notamment de silice-alumine amorphe et pouvant contenir des proportions variables d'argile, sont caractérisées par des activités craquantes vis à vis des hydrocarbures environ 1000 à 10000 fois supérieures à celles des premiers catalyseurs utilisées. L'arrivée sur le marché de ces nouveaux catalyseurs zéolithiques a révolutionné le procédé de craquage d'une part par les gains très importants enregistrés au niveau de l'activité et de la sélectivité en essence et d'autre part par les modifications considérables qu'elle a imposées sur la technologie de l'unité, notamment :

- le craquage dans l'élévateur (le "riser") (ou tube dans lequel le catalyseur et la charge cheminent de bas en haut, par exemple),
- la diminution des temps de contact,
- la modification des techniques de régénération.

On reviendra ultérieurement sur ces trois points.

La zéolithe X (structure Faujasite) caractérisée par un rapport molaire $SiO_2/Al_2O_3$ compris entre 2 et 3 a été la première utilisée. Fortement échangée avec des ions terres-rares, elle possédait une forte activité et une grande résistance thermique et hydrothermique. Vers la fin des années 1960, cette zéolithe a été progressivement remplacée par la zéolithe Y qui possédait une tendance à produire du coke légèrement moindre et surtout une résistance thermique et hydrothermique très améliorée. Actuellement, une grande majorité des catalyseurs proposés (probablement plus de 90 %) contiennent une zéolithe Y échangée avec des ions de terres rares et/ou des ions ammonium.

A partir du début des années 1970, l'industrie du pétrole commença à souffrir d'un manque de disponibilité en pétrole brut, alors que la demance pour des quantités croissantes d'essence à haut indice d'octane ne cessait de progresser. De plus, l'approvisionnement s'orientait progressivement vers des bruts de plus en plus lourds. Le traitement de ces derniers constituent un problème difficile pour le raffineur

par suite de leurs teneurs élevées en poisons des catalyseurs, notamment en composés azotés et en composés métalliques (nickel et vanadium surtout), des valeurs inhabituelles en Carbone Conradson et surtout en composés asphalténiques.

La nécessité de traiter des charges plus lourdes et d'autres problèmes plus récents, tels que : la suppression progressive mais générale dans l'essence des additifs à base de plomb, l'évolution lente mais sensible dans divers pays de la demande en distillats moyens (kérosène et gazoles), ont incité les raffineurs à rechercher des catalyseurs améliorés permettant d'atteindre les objectifs suivants :
- catalyseurs plus stables thermiquement et hdyrothermiquement et plus tolérants aux métaux,
- produire moins de coke à conversion identique,
- obtenir une essence d'indice d'octane plus élevé,
- sélectivité améliorée en distillats moyens.

Dans la majorité des cas, on cherche à minimiser la production de gaz légers, comprenant des composés ayant de 1 à 4 atomes de carbone dans leur molécule, et par conséquent les catalyseurs sont conçus pour limiter la production de tels gaz légers. Mais dans certains pays, notamment dans certains pays en voie de développement, il peut apparaître une forte demande en ces produits, ou en certains d'entre eux, notamment en propylène. Le procédé de craquage catalytique peut satisfaire dans une certaine mesure une telle demande à condition en particulier d'adapter le catalyseur en vue de cette production.

Une manière efficace d'adapter le catalyseur consiste à ajouter aux masses catalytiques classiques un agent actif présentant les deux qualités suivantes :

1. Craquer des molécules lourdes avec une bonne sélectivité en hydrocarbures à 3 atomes de carbone et notamment en propylène.

2. Etre suffisamment résistant aux conditions sévères de pression partielle de vapeur d'eau et de température qui régnent dans le régénérateur d'un craqueur industriel. En effet, compte tenu de la tendance des charges actuelles à produire de plus en plus de coke sur les catalyseurs et de la grande sensibilité au coke des performances des zéolithes, la tendance actuelle est non seulement à rechercher des catalyseurs moins sélectifs en coke mais aussi à pousser le régénération du catalyseur pour laisser le moins possible de coke à l'issue de la combustion et ceci amène, dans certains procédés, à une augmentation de la temperature du régénérateur. On arrive ainsi à une situation où, dans le régénérateur règnent des pressions partielles élevées de vapeur d'eau, comprises entre 0,2 et 1 bar, (1 bar = 0,1 MPa), et des températures locales au niveau du catalyseur de 750 à 850°C voire même 900°C pendant des durées de l'ordre de quelques dizaines de secondes à quelques minutes. Dans ces conditions, le zéolithe qui est l'agent actif principal du catalyseur peut perdre rapidement une partie importante de son activité par suite de la dégradation irréversible de sa structure. Malgré les astuces techniques diverses mises au point ces dernières années pour limiter la température du régénérateur (adjonction de serpentins pour éliminer les calories par production de vapeur ou refroidissement intermédiaire du catalyseur) ou pour limiter la teneur en vapeur d'eau à haute température (techniques à deux régénérateurs comme celle utilisée dans le procédé R2R de TOTAL-IFP), il est nécessaire que la zéolithe présente dans le catalysateur de craquage possède une excellente stabilité thermique et hydrothermique.

Parmi les zéolithes susceptibles de permettre l'obtention d'un catalyseur possédant les propiétés requises mentionnées ci-avant, on a découvert de façon surprenante qu'un offrétite stabilisée et désaluminée permet d'obtenir un catalyseur nettement supérieur à celui que peut être obtenu par exemple avec l'une des zéolithes suivantes, qui à priori auraient pu être considérées comme potentiellement intéressantes et qui ont été étudiées dans le cadre du travail qui a débouché sur la présente invention et également en comparaison avec EP-A 0 020 154 décrivant l'association d'une matrice, d'une zéolite ultrastable et d'une zéolite cristalline à petits pores non stabilisée et non désaluminisée conformément à la technologie de la présente invention:
- Erionite ou érionite T : zéolithes permettant une bonne sélectivité pour la production d'hydrocarbures à trois atomes de carbone dans leur molécule, mais présentant d'une part une stabilité hydrothermique nettement moins bonne que l'offrétite, et d'autre part l'inconvénient de posséder une structure poreuse trop fermée qui ne lui permet pas d'être efficace pour la conversion de certaines molécules hydrocarbonées volumineuses telles que, par exemple, les isoparaffines, les naphtènes et les alkylaromatiques.
- ZSM5 : zéolithe très stable hydrothermiquement, mais insuffisamment sélective pour la production d'hydrocarbures à trois atomes de carbone dans leur molécule comme le démontrera l'un des exemples ci-après.
- Ferriérite : zéolithe très stable hydrothermiquement, mais dont la structure poreuse se bouche à haute température en présence de vapeur d'eau par extraction massive d'atomes d'aluminium de la charpente aluminosilicatée. Ces atomes d'aluminium extraits se localisent en effet dans la microporosité dont ils bloquent l'accès aux molécules, et ils ne sont pratiquement pas éliminés par des traitements chélatants ou acides. De plus, lorsqu'elle possède encore une légère activité, la ferriérite produit trop d'hydrocarbures à 1 ou 2 atomes de carbone pour être intéressante.
- Mordénite : zéolithe très stable hydrothermiquement et facilement stabilisable et désaluminable mais dont la sélectivité vis à vis d'une production d'hydrocarbures à trois atomes de carbone est nettement insufficiente.

L'offrétite stabilisée et désaluminée utilisée pour la préparation du catalyseur selon la présente invention, est obtenue à l'aide de traitements modificateurs qui permettent d'ajuster à volonté la composition en aluminium et en silicium de sa charpente aluminosilicatée. Sa préparation a été décrite dans la demande de brevet européen EP-A-190949.

Les traitements modificateurs utilisés constituent l'un des rares moyens, autre que la synthèse, permettant d'obtenir des zéolithes fortement enrichies en silice.

Les zéolithes appartenant à des groupes autres que les pentasils ou que les groupes apparentés à ce dernier (groupe de la mordénite) telles les zéolites Y, la zéolithe oméga (ou mizzite), l'érionite, l'offrétite, la chabazite, etc... ne peuvent en effet être obtenues qu'exceptionnellement avec des rapports SiO2/A1203 supérieurs à 12-15 à l'issue de la synthèse hydrothermale.

Les traitements modificateurs qui permettent de modifier notablement la composition de la charpente aluminosilicatée, sont une voie de choix pour ajuster les propriétés acides des zéolithes et améliorer leurs performances.

Dans la présente invention, nous avons utilisé zéolithes du type offrétite acide modifiée pour préparer un catalyseur de craquage de charges hydrocarbonées, permettant d'obtenir une sélectivité améliorée pour la production d'hydrocarbures à trois atomes de carbone par molécule et en particulier de propylène.

L'offrétite est une zéolithe naturelle ou synthétique, appartenant au groupe chabazite. Sa structure a longtemps été considérée comme identique à celle de l'érionite zéolithe de la même famille, par les similitudes de leurs spectres de diffraction X (HEY M.H. & FEJER E.E., Min. Mag. 33, 66, 1962). Cependant, ces deux structures sont différentes : d'une part, la maille hexagonale de l'offrétite a une dimension suivant l'axe $\vec{c}$ qui est la moitié de celle de l'érionite (BENNETT J.M. & GARD J.A., Nature 214, 1005, 1967), et ainsi, les raies 1 impaires présentes dans les spectres de diffraction X de l'érionite sont absentes dans les spectres de l'offrétite (GARD J.A. & TAIT J.M., Molecular Sieve Zeolites-1, Advan. Chem., Ser. 101, 230, 1971) ; d'autre part, les séquences d'empilement des deux zéolithes sont différentes (WHYTE T.E. Jr., WU E.L., KERR G.T. & VENUTO P.B., J. Catal. 20, 88, 1971). L'offrétite possède ainsi une structure beaucoup plus ouverte que l'érionite. Des défauts d'empilement peuvent survenir dans ces structure, donnant lieu à la formation d'érionite T qui est une zéolithe de structure offrétite avec des défauts d'empilement de type érionite.

La structure de l'offrétite a été précisée par de nombreux auteurs. Cette zéolithe est constituée de deux types de colonnes : des colonnes de cages gmélinites à 14 faces de diamètre 3,6 Angströms environ, ($3,6 \times 10^{-10}$m) et des colonnes de cages cancrinites à 11 faces alternant avec des prismes hexagonaux. Ces colonnes sont dirigées suivant l'axe $\vec{c}$ entraînent la formation de deux types de canaux : des gros canaux dodécagonaux parallèles à l'axe $\vec{c}$, de diamétres compris entre 6 et 7 Angströms, ($6$ à $7 \times 10^{-10}$m) et des canaux octogonaux perpendiculaires à l'axe $\vec{c}$.

L'offrétite est le plus souvent synthétisée en présence d'ions tétraméthylammonium $(CH_3)_4N^+$ ou TMA) et potassium $K^+$. Les rapports $SiO_2/Al_2O_3$ molaires sont généralement compris entre 4 et 10. D'après la structure décrite plus haut, quatre localisations sont possibles pour ces cations : les prismes hexagonaux, les cages cancrinites, les cages gmélinites et les gros canaux. La répartition de ces cations est la suivante (AIELLO R., BARRER R.M., DAVIES J.A. & KERR I.S., Trans. Faraday Soc. 66, 1610, 1970 ; AIELLO R. & BARRER R.M., Chem. Soc. (A), 1470, 1970) : les ions potassium sont situés dans les prismes hexagonaux, les cages cancrinites et éventuellement les gros canaux ; les ions TMA, plus encombrés, sont situés dans les cages gmélinites et les gros canaux. Il résulte de cette répartition les propriétés d'échanges théoriques suivantes : les ions TMA ou $K^+$ situés dans les gros canaux sont accessibles, donc échangeables, alors que les ions TMA situés dans les cages gmélinites sont "prisonniers" donc non échangeables ; les ions potassium situés dans les cages cancrinites sont à priori accessibles donc échangeables, par contre ceux situés dans les prismes hexagonaux sont inaccessibles donc non échangeables.

Il n'existe pas actuellement de méthode de synthèse directe d'offrétites riches en silice. On doit donc avoir recours à des modifications de ce solide, c'est-à-dire à la désalumination.

- Produit offrétite désaluminée.

Il est possible, à partir d'une offrétite K-TMA dont le rapport molaire silice sur alumine est comprise entre 4 et 10, (ou 6 à 10) dont le diagramme de diffraction X et les paramètres cristallins sont présentés dans le tableau A, d'obtenir une offrétite riche en silice de rapport molaire silice sur alumine de préférence largement supérieur à 10 en effectuant des cycles traitements thermiques-traitements en phase liquide. Les traitements thermiques s'effectuent à des températures comprises entre 400 et 900°C. Les traitements en phase liquide sont soit des échanges cationiques soit des attaques acides. Le procédé doit comporter au moins un échange ionique et au moins une attaque acide. Les échanges cationiques s'effectuent dans au moins une solution d'un sel d'ammonium ionisable, à des températures comprises entre 0 et 150°C. Les attaques acides s'effectuent avec des acides minéraux tels que l'acide chlorhydrique,

l'acide nitrique, l'acide bromhydrique, l'acide sulfurique, l'acide perchlorique ou organiques tels que l'acide acétique ou l'acide benzoïque, par exemple, à des températures comprises entre 0 et 150°C.

Le produit obtenu a un spectre de diffraction correspondant à celui de l'offrétite, de paramètres cristallins de dimension suivante : $\vec{a}$ compris entre 1,285 et 1,315 nm et $\vec{c}$ compris entre 0,748 et 0.757 nm (1 nm = $10^{-9}$m), une capacité d'adsorption de benzène supérieure à 5 % et de préférence à 6 %, (voir conditions plus loin), une microporosité secondaire, mesurée par la méthode BJH, située entre 3 et 5 nm et correspondant à environ 5 à 50 % du volume poreux total de la zéolithe (la méthode BJH est explicitée plus loin).

TABLEAU A

| 2 thêta | d (nm) | Intensité | 2 thêta | d (nm) | Intensité |
|---|---|---|---|---|---|
| 7,65 | 1,153 | 100 | 27,00 | 0,330 | 19 |
| 11,70 | 0,755 | 14 | 28,35 | 0,315 | 26 |
| 13,40 | 0,661 | 29 | 30,55 | 0,292 | 4 |
| 14,05 | 0,629 | 8 | 31,40 | 0,284 | 100 |
| 15,45 | 0,573 | 16 | 33,50 | 0,267 | 13 |
| 19,45 | 0,456 | 27 | | | |
| 20,55 | 0,432 | 41 | | | |
| 23,36 | 0,380 | 31 | | | |
| 23,72 | 0,375 | 78 | | | |
| 24,85 | 0,358 | 41 | | | |

Diagramme de diffraction des rayons X d'une offrétite K-TMA (9,9 % poids $K^+$) de rapport molaire $\frac{SiO_2}{Al_2O_3} = 8$

Paramètres Cristallins $\vec{a}$ = 1,322 nm ; $\vec{c}$ = 0,752 nm.

- Caractérisation.

L'offrétite riche en silice obtenue a été caractérisée par les techniques suivantes :

- Diffraction des rayons X.

L'appareillage et les méthodes utilisées sont décrits dans la demande de brevet Européen de la demanderesse EP-A-190 949.

- Adsorption d'eau

Chaque échantillon est activé par un préchauffage à 425°C pendant 16 heures à une pression de 5 x $10^{-3}$mmHg (6,67 Pa) dans un appareil conventionnel type Mc Bain. Ensuite, la température de l'échantillon est ajustée à la valeur désirée (25°C) et l'échantillon est mis en contact avec la vapeur d'eau à la pression désirée (P/Po = 0,1).

- Adsorption de benzène.

Ce test est effectué sur le même type d'appareil et avec le même type d'activation que pour les mesures d'adsorption d'eau. La température de l'échantillon est fixée à 25°C et la pression de benzène à environ 70 bars (1 bar = 0,1 MPa) La durée d'adsorption est fixée à 4 heures.

- Microporosité.

La microporosité est déterminée par la technique BJH (BARRET, JOYNER, HALENDA, J. Am. Chem. Soc. 73, 373 (1951) basée sur l'exploitation numérique de l'isotherme de désorption d'azote ; le volume poreux total est pris à une pression d'azote telle que P/Po = 0,9, P étant la pression partielle d'azote de la mesure et Po la pression de vapeur saturante de l'azote à la température de la mesure.

Les dosages de potassium, sodium, silicium, et aluminium ont été effectués par analyse chimique.

- Obtention du produit.

Le produit de départ est une offrétite synthétique, contenant les ions tétraméthylammonium (TMA) et $K^+$ ($K^+$ par exemple voisin de 10 % poids) ou TMA,

$$K^+, Na^+ \left(0,5 < \frac{K}{Na + K} < 0,8\right)$$

et de rapport molaire silice sur alumine compris entre 4 et 10.

L'offrétite de rapport molaire silice sur alumine supérieur ou égal à 15 de la présente invention, a été obtenue en effectuant, sur une offrétite partiellement échangée par la technique classique d'échanges cationiques de l'art antérieur, au moins un cycle et de préférence au moins deux cycles successifs traitements thermiques-traitements phase liquide, tels que décrits ci-avant.

Le type de manipulations effectuées sur une offrétite contenant des ions TMA et potassium (9,9 % poids) est le suivant :

1) D'abord on prépare un produit selon les techniques de l'art antérieur, contenant un taux de potassium compris entre 1,5 et 3 % en poids, cette technique ne permettant pas de descendre généralement en-dessous de 1,5 % poids de potassium ; la méthode est la suivante :

. Elimination des cations TMA par calcination sous air, à des débits compris entre 0,01 et 100 l/h/g ; de préférence entre 0,5 et 10 l/h/g et à des températures comprises entre de préférence 450 et 650°C, pendant une durée supérieure à une demi-heure.

. Au moins trois échanges cationiques selon la technique classique, à des températures comprises entre 0 et 150°C, avec un sel d'ammonium ionisable tel que le nitrate, le sulfate, le chlorure, l'acétate d'ammonium et de molarité supérieure à 0,1 M et de préférence supérieure à 1M et généralement inférieure à 3M; ces échanges sont réalisés avec un rapport volume de solution sur poids de solide sec (V/P) supérieure à 2, de préférence supérieur à 3 et généralement inférieur à 20 et même souvent inférieur à 10.

Le solid obtenu par cette série d'échanges cationiques contient de 1,5 à 3 % en poids de potassium environ.

2) Puis préparation, à partir du produit obtenu par la méthode de l'art antérieur décrite ci-dessus, d'une offrétite enrichie en silice, de rapport molaire silice sur alumine supérieur à 10, par au moins un cycle d'opérations suivantes :

. Calcination sous air, de préférence contenant entre 5 et 100 % de vapeur d'eau, à des débits compris entre 0,01 et 100 l/h/g, de préférence entre 0.5 et 10 l/h/g, à des températures comprises entre 400 et 900°C, de préférence entre 500 et 800°C, et pendant une durée supérieure à une demi heure, de préférence supérieure à une heure.

On peut remplacer la calcination sous air humide par une calcination en atmosphère statique, c'est-à-dire en l'absence de tout débit gazeux, l'humidité étant apportée par le produit lui-même. On peut appeler ce protocole self-steaming ou calcination en atmosphère confinée.

. Au moins un échange cationique dans les conditions décrites plus haut ou au moins une attaque acide à des températures comprises entre 0 et 150°C, avec un acide minéral tel que l'acide chlorhydrique, l'acide nitrique, l'acide bromhydrique, l'acide sulfurique, l'acide perchlorique, ou organique tel que l'acide acétique ou l'acide benzoïque, de normalité supérieure à 0,1 N et de préférence comprise entre 0,5 et 5N), avec un rapport V/P supérieur à 2 et de préférence supérieur à 3 et généralement inférieur à 50 et souvent inférieur à 10 et pendant des durées supérieures à 10 minutes.

Le procédé met généralement en oeuvre au moins un échange cationique et au moins une attaque acide.

L'attaque acide peut être effectuée de façon contrôlée, selon le protocole suivant : le solide est d'abord mis en suspension dans l'eau distillée à une température comprise entre 0 et 150°C, puis on ajoute goutte à goutte la quantité d'acide théorique nécessaire pour extraire une quantité voulue d'aluminium (3 protons $H^+$ par aluminium). De préférence, on se place en défaut d'ions $H^+$ par rapport à la quantité d'aluminium total contenue dans le solide. Une fois l'ajout d'acide terminé, on laisse sous agitation pendant une durée supérieure à une demi-heure. On pourra ainsi obtenir selon l'invention une offrétite modifiée de rapport molaire $SiO_2/Al_2O_3$ supérieur à 15 à partir d'une offrétite de rapport molaire $SiO_2/Al_2O_3$ compris entre 4 et 10 contenant de 1,5 à 3 % de potassium par le cycle d'opérations suivantes, conduit après l'échange cationique préalable :
- calcination sous air humide ou self-steaming,
- traitement par un acide,

et/ou encore par le cycle d'opérations suivantes :
- calcination sous air humide ou self steaming,
- échange cationique par des ions ammonium,
- calcination sous air humide ou self-steaming,
- traitement par un acide.

Il est donc possible que le premier traitement en phase liquide soit une attaque acide. Cependant celle-ci devra être menée avec beaucoup de précautions, c'est-à-dire à un pH pas trop faible et une température pas trop élevée pour ne pas effecter la cristallinité du solide et on préfèrera en général, surtout pour des offrétites de rapport molaire $SiO_2/Al_2O_3$ de départ relativement faible, que le premier traitement en phase liquide soit un échange cationique. Il est également possible d'effectuer un traitement en phase liquide qui soit un traitement mixte échange cationique/attaque acide en mélangeant un acide avec un sel d'ammonium.

L'optimisation de la méthode, le choix de ou des premiers traitements en phase liquide, le nombre de cycles calcination-traitement phase liquide à effectuer, dépendent du rapport molaire $SiO_2/Al_2O_3$ initial, lequel joue sur la stabilité du produit, et du rapport molaire $SiO_2/Al_2O_3$ final. Ainsi le nombre d'opérations nécessaires pour parvenir à un rapport $SiO_2/Al_2O_3$ donné sera d'autant plus grand que le rapport initial sera faible, et que le rapport final sera élevé.

Les offrétites acides enrichies en silice utilisées dans la présente invention sont caractérisées par les propriétés suivantes :
- rapport molaire $SiO_2/Al_2O_3$ supérieur à environ 15 et inférieur à environ 500,
- paramètres cristallins $\vec{a}$ et $\vec{c}$ compris respectivement pour $\vec{a}$ entre 1,285 et 1,315 nm, pour $\vec{c}$ entre 0,748 et 0,757 nm,
- teneur en potassium inférieure à 1,5 % en poids avec de préférence en outre :
- capacité d'adsorption de benzène à 25°C, à une pression partielle de 70 torrs, (133,32x70Pa) supérieure à 5 % en poids.
- existence de préférence d'une microporosité secondaire, mesurée par la méthode BJH, située entre 3 et 5 nm et correspondant environ 5 à 50 % du volume poreux total de la zéolithe, lequel est déterminé par adsorption d'azote pour un rapport P/Po de 0,9.

On a découvert que les catalyseurs les plus stables contenaient des offrétites fortement enrichies en silice. Plus précisément ces offrétites ont les caractéristiques suivantes :
- rapport molaire $SiO_2/Al_2O_3$ supérieur à 20 et de préférence supérieur à environ 30 (notamment entre 20 et 400 et plus particulièrement entre 30 et 300).
- paramètres cristallins $\vec{a}$ et $\vec{c}$ compris respectivement pour $\vec{a}$ entre 1,290 et 1,310 nm et de préférence entre environ 1,294 et environ 1,300 nm pour $\vec{c}$ entre 0,750 et environ 0,755 nm.
- teneur en potassium inférieure à 1 % en poids et de préférence à 0,5 % en poids,

et avec de préférence en outre :
- capacité d'adsorption de benzène, à 25°C et à une pression partielle de 70 torrs, supérieure à 5 et de préférence à 6 % en poids,
- capacité d'adsorption d'eau, à 25°C pour un rapport P/Po de 0,1, inférieure à 18 % et de préférence inférieure à 13 % en poids,
- existence de préférence d'une microporosité secondaire mesurée par la méthode BJH, située entre 3 et 5 nm et correspondant à 5 à 50 % du volume poreux total de la zéolithe.

Il va également de soi que les traitements modificateurs qui viennent d'être décrits pour l'offrétite peuvent être appliqués à toutes les structures du type érionite-offrétite et notamment à la zéolithe ZSM-34.

Le catalyseur de la présente invention renferme :

a) De 20 à 95 % et de préférence de 30 à 80 % d'une manière souvent avantageuse de 50 à 80 % au poids d'au moins une matrice définie ci-dessous (constituant A) ;

b) De 1 à 60% et de préférence de 4 à 50 % et d'une manière souvent avantageuse de 10 à 40 % en poids d'au moins une zéolithe de structure ouverte autre qu'une offrétite (constituent B) ; le terme zéolithe de structure ouverte désigne dans la présente invention une zéolithe dont l'ouverture des canaux dodécagonaux principaux a une dimension telle qu'elle est équivalente à une ouverture circulaire ayant

un diamètre d'au moins 7 Angtröms ($7x10^{-10}m$) ; ainsi l'ouverture des canaux dodécagonaux principaux est d'au moins $7x10^{-10}$ m. La liste des zéolites utilisables est donnée ci-dessous. ·

c) De 0,5 à 60 % et de préférence de 1 à 40 % et d'une manière souvent avantageuse de 2 à 30 % d'au moins une offrétite dont l'ouverture des canaux dodécagonaux principaux est inférieure à $7x10^{-10}$ m (7 Angströms), (constituent C) ayant un rapport molaire $SiO_2/Al_2O_3$ de 15 à 500, des paramètres cristallins $\vec{a}$ et $\vec{c}$ de la maille élémentaire respectivement de 1,285 à 1,315 nm pour $\vec{a}$ et de 0,748 à 0,757 nm pour $\vec{c}$, et une teneur en potassium inférieure à 1,5 % en poids, la teneur totale en métaux alcalins étant de préférence inférieure à 1,5 % en poids.

La somme des pourcentages en poids des constituants A, B et C contenus dans les catalyseurs est égale dans chaque cas à 100 %.

Le constituant A, du catalyseur selon l'invention, comprend au moins une matrice choisie dans le groupe formé par l'alumine, la silice, la magnésie, l'argile, l'oxyde de titane, la zircone, les combinaisons de deux au moins de ces composés et les combinaisons alumine-oxyde de bore.

A titre d'exemple de combinaisons d'au moins deux composés du groupe ci-avant, on peut citer la silice-alumine et la silice-magnésie.

Comme constituant A préféré on peut citer la silice, l'alumine, la magnésie et les mélanges silice-alumine et silice-magnésie.

Le constituant B, du catalyseur selon l'invention, comprend au moins une zéolithe de structure ouverte, ayant des canaux dodécagonaux d'au moins 7 Angströms ($7x10^{-10}m$) d'ouverture, généralement choisie dans le groupe formé par les zéolithes X, Y, L, oméga et bêta. On emploie de préférence les zéolithes de structure faujasite et en particulier les zéolithes Y de préférence stabilisées, couramment appelées ultrastables ou USY, ou enrichies en silice telle la zéolithe LZ210 décrite dans les brevets US 4.403.023 et 4.534.853, EP. 0.139.291 et 0.124.120, soit sous forme au moins partiellement échangées avec des cations des métaux alcalino-terreux et surtout avec des cations des métaux des terres-rares de numéro atomique 57 à 71 inclus, soit sous forme hydrogène.

Le constituant C, du catalyseur selon l'invention, (différent du constituant B) comprend au moins une offrétite choisie parmi les offrétites définies ci-avant. L'offrétite peut être employée sous forme hydrogène, donc ne contenant pratiquement aucun cation métallique en dehors de la très faible quantité de cations de métaux alcalins (potassium notamment) qui sont des cations résiduels provenant de la synthèse de la zéolithe. L'offrétite peut également être employée sous forme au moins partiellement échangée par des cations métalliques multivalents, une partie des sites cationiques de la charpente alumino-silicatée sont alors occupés par ces cations ; de tels cations sont par exemple des cations des métaux alcalino-terreux et de préférence des cations des métaux des terres-rares de numéro atomique 57 à 71 inclus et plus spécialement du lanthane ; ces cations sont destinés à bloquer l'évolution structurale de l'offrétite particulière employée qui risque en effet de se produire dans les conditions sévères du régénérateur de l'unité industrielle de craquage.

L'offrétite modifiée, utilisée dans la préparation du catalyseur selon la présente invention, telle que décrite ci-avant est une offrétite dont la charpente alumino-silicatée est constituée uniquement d'atomes d'aluminium et d'atomes de silicium, cependant on peut également employer dans la préparation du catalyseur selon la présente invention, une offrétite modifiée telle que décrite ci-avant dans laquelle une partie de l'aluminium et/ou du silicium de la charpente aluminiosilicatée est remplacée, à l'issue de la synthèse, par d'autres éléments, métaux ou métalloïdes, tels que par exemple B, P, Ti, V, Cr Fe, Mn, Ga, Ge et Zr.

Le catalyseur objet de la présente invention peut être préparé par toutes méthodes bien connues de l'Homme du Métier.

Ainsi le catalyseur peut être obtenu par incorporation simultanée de l'offrétite et de la zéolithe de structure ouverte à la matrice selon les méthodes classiques de préparation des catalyseurs de craquage contenant une zéolithe. Le catalyseur peut être également obtenu par mélange mécanique d'un produit comprenant une matrice et une zéolithe de structure ouverte telle que par exemple une zéolithe Y et d'un produit comprenant l'offrétite modifiée décrite ci-avant qui est par exemple un mélange de ladite offrétite avec une matrice ; le mélange offrétite-matrice contient généralement de 1 à 90 % en poids et de préférence de 5 à 60 % en poids d'offrétite par rapport au poids total du mélange.

Le mélange matrice-zéolithe de structure ouverte employé dans la préparation du catalyseur de la présente invention est généralement un catalyseur classique de craquage selon l'art antérieur (par exemple un catalyseur du commerce) ; l'offrétite modifiée décrite ci-dessus que l'on emploie pour fabriquer le catalyseur de l'invention peut alors être considérée comme un additif qui peut être employé tel quel en vu de son mélange avec le catalyseur classique de craquage défini ci-avant ou être préablement incorporé à une matrice, l'ensemble matrice-offrétite modifiée constituant alors l'additif que l'on mélange au catalyseur classique de craquage défini ci-avant, par exemple, après une mis en forme adéquate, par mélange mécanique des grains contenant l'offrétite modifiée et des grains de catalyseur classique de craquage.

Les conditions générales des réactions de craquage catalytiques sont particulièrement bien connues pour ne pas être répétées ici dans le cadre de la présente invention (voir par exemple USP 3,293,192 ; 3,449,070 ; 4,415,438 ; 3,518,051 ; 3,607,043).

Dans le but de produire la plus grande quantité possible de propylène, il est parfois avantageux d'augmenter légèrement la température à laquelle on effectue le craquage par exemple d'environ 5 à environ 30°C. Le catalyseur de la présente invention est cependant dans la majorité des cas suffisamment actif pour qu'une telle augmentation de température ne soit pas nécessaire. Les autres conditions du craquage sont inchangées par rapport à celles employées dans l'art antérieur.

Selon une variante de la présente invention, le catalyseur décrit précédemment peut subir diverses modifications en vue d'une meilleure adaptation au craquage catalytique, lorsque l'on désire augmenter le nombre d'octane de l'essence produite par craquage.

On sait que l'industrie pétrolière utilise de façon usuelle des procédés de craquage, dans lesquels des molécules d'hydrocarbures à haut poids moléculaire et à point d'ébullition élevé sont scindées en molécules plus petites, qui bouillent dans des domaines de températures plus faibles, convenant à l'usage recherché.

On a décrit brièvement ci-dessus le procédé dit de craquage catalytique à l'état fluide (en anglais, Fluid Catalytic Cracking, ou encore procédé FCC). Dans ce type de procédé, la charge d'hydrocarbures est vaporisée par mise en contact à haute température avec un catalyseur de craquage, lequel est maintenu en suspension dans les vapeurs de la charge. Après que l'on ait atteint par craquage la gamme de poids moléculaire désirée, avec un abaissement correspondant des points d'ébullition, le catalyseur est séparé des produits obtenus, strippé, régénéré par combustion du coke formé, puis remis en contact avec la charge à craquer.

Dans de nouveaux procédés FCC, on peut utiliser deux zones de régénération à travers lesquelles circule le catalyseur usé.

Les charges à craquer sont habituellement injectées dans la zone réactionnelle à une température généralement comprise entre 480°C et 540°C, sous une pression relative de 0,7 à 3,5 bar, tandis que la température du catalyseur régénéré qui arrive dans cette zone peut être de l'ordre de 600 à 950°C.

Le catalyseur est introduit à la base d'un élévateur du type ascendant (ou "riser") en une quantité déterminée par exemple par l'ouverture ou la fermeture d'une vanne. Les grains de catalyseurs sont alors conditionnés et accélérés vers le haut du "riser" par injection à la base de ce dernier, d'un fluide gazeux. Cette injection est faite à l'aide d'un distributeur de fluide. La charge à craquer est introduite à un niveau supérieur et vaporisée au moins partiellement à l'aide d'un dispositif approprié dans le flux dense de grains de catalyseur.

Le "riser" débouche à son sommet dans une enceinte qui lui est par exemple concentrique et dans laquelle s'effectuent, d'une part, la séparation de la charge craquée et, d'autre part, le strippage du catalyseur usé. Le catalyseur est séparé de l'effluent, entraîné par un système cyclonique, puis épuré et purifié.

Les charges d'hydrocarbures susceptibles d'être injectées dans les unités du type décrit plus haut peuvent contenir des hydrocarbures ayant des points d'ébullition se situant entre 200 et 550°C ou plus, et leur densité peut varier entre 10 et 35°API. Ces charges également, peuvent être des charges lourdes contenant des hydrocarbures dont le point d'ébullition peut aller jusqu'à 750°C et plus, et dont la densité peut varier entre 10 et 35°API, voire entre 0 et 25°API.

Par exemple, on peut citer comme charges, celles présentant des points d'ébullition finaux de l'ordre de 400°C, tels que des gazoles sous vide, mais aussi des huiles hydrocarbonées plus lourdes, telles que des pétroles bruts et/ou stabilisés, et des résidus de distillation atmosphérique ou de distillation sous vide ; ces charges peuvent le cas échéant avoir reçu un traitement préalable tel que par exemple, un hydrotraitement en présence par exemple de catalyseurs de type cobalt-molybdène ou nickel-molybdène.

Ces charges peuvent être diluées ou non par des coupes d'hydrocarbures ayant déjà subi l'opération de craquage, qui sont recyclées, comme par exemple des huiles légères de recyclage ("light cycle oil", L.C.O.) et/ou des huiles lourdes de recyclage (heavy cycle oil", H.C.O.) et/ou la fraction la plus lourdes non transformée bouillant généralement au-dessus de 500°C et communément appelée "slurry". Suivant le mode préféré de l'invention, ces charges sont disponibles et préchauffées dans un domaine de température compris entre 300 et 450°C avant leur traitement.

Le catalyseur amélioré utilisé dans la présente invention permet d'éméliorer la flexibilité sur la structure des rendements en produits et la qualité de la coupe essence, c'est à dire les indices d'octane recherche et moteur de cette dernière.

On rappelle que d'une façon générale, dans le domaine du craquage catalytique, la mise en oeuvre du procédé dépend notamment de la nature des effluents hydrocarbonés que souhaite obtenir l'utilisateur en fonction des objectifs de raffinage du moment : ainsi d'une façon générale un craquage catalytique d'une huile permet d'obtenir :

- des gas légers (hydrogène, hydrocarbures à 1 et 2 atomes de carbone par molécule),
- du propylène,
- du propane ($C_3$),
- des hydrocarbures saturés à 4 atomes de carbone par molécule (C4 saturés et iso C4),
- des hydrocarbures insaturés à 4 atomes de carbone,
- des essences,
- une huile relativement légère ou diluant léger ("light cycle oil" ou "L.C.O."),

- une huile relativement lourde ou diluant lourd ("heavy cycle oil" ou "H.C.O."),
- un résidu ou "slurry" qui est généralement purifié du catalyseur entraîné pour obtenir une huile clarifée ("clarified oil" ou C.O.) ou une huile décantée ("Decanted oil ou D.O.).

Il peut arriver qu'un objectif de raffinage dans le cadre d'un craquage catalytique, soit l'obtention d'une quantité accrue de gaz de pétrole liquéfiés (C3-C4 ou LPG) et plus particulièrement d'une quantité accrue de propylène voire de butènes et/ou d'isobutane. Par ailleurs, il est bien connu que la tendance générale est de réduire la teneur en additif à base de plomb dans les essences constituant les carburants automobile et que ceci nécessitera la fabrication d'essences, notamment par craquage, ayant des indices d'octane clair recherche et moteur améliorés. Certains utilisateurs cherchent ainsi soit à augmenter sensiblement la production de C3 insaturé (propylène) sans augmenter la production d'hydrocarbures en C4 et de gaz secs saturés (H2, C1, C2), soit à améliorer sensiblement la production de C3 insaturé (propylène) et d'iso C4 sans augmenter notablement la production de gaz secs saturés (H2, C1, C2), soit à augmenter sensiblement la production de C3 insaturé (propylène) et éventuellement des C4, notamment insaturés, sans augmenter la production des gaz secs saturés (H2, C1, C2). Dans les 3 cas, il est le plus souvent recherché d'y associer une production maximale d'essence d'indice d'octane particulièrement élevé. Ce sont les 2 dernières possibilités et l'augmentation d'octane qui sont recherchées dans la présente demande de brevet et qui peuvent être obtenues par l'emploi d'un nouveau catalyseur spécifique de craquage catalytique.

Le catalyseur spécifiquement adapté permet en effet d'atteindre simultanément plusieurs de ces objectifs, notamment une amélioration notable de la qualité de l'essence et une augmentation des rendements en propylène butènes et isobutane.

Le procédé de la présente invention consiste à ajouter au catalyseur de base, qui contient au moins une zéolithe de structure faujasite (zéolithes X ou Y), une petite quantité d'une zéolithe d'ouverture des pores principaux plus petite que celle de la faujasite, inférieure à $7 \times 10^{-10}$ m et par exemple compris entre 0,60 et 0,68 nm.

Parmi les zéolithes susceptibles de permettre l'obtention d'un catalyseur susceptible d'améliorer les rendements en produits légers à 3 et 4 atomes de carbone et notamment en propylène, butènes et isobutane et surtout d'augmenter de manière très notable, les indices d'octane recherche et moteur de l'essence (RON et MON), on a découvert de façon surprenante que les zéolithes de la famille de l'érionite, telle que l'érionite, l'offrétite, ou des zéolithes apparentées à cette dernière telle la ZSM-34 ou les zéolithes AG2, N-O, ZKU ou encore les zéolithes constituées de cristaux mixtes d'érionite et offrétite (l'érionite T par exemple) possédent ces propriétés. Elles permettent d'obtenir ainsi des rendements en propylène, butènes et isobutane et des indices d'octane de l'essence nettement supérieurs à ceux qui peuvent être obtenus avec les catalyseurs zéolithiques classiques de craquage, surtout lorsqu'elles sont utilisées en additif de ces derniers. Parmi ces zéolithes de la famille érionite, on a découvert de plus que les offrétites stabilisées et désaluminées, caractérisées notamment par un rapport molaire silice sur alumine supérieur ou égal à 15, permettent d'obtenir des catalyseurs particulièrement performants. L'une des zéolithes préférées de la présente invention est l'offrétite stabilisée et désaluminée. Elle est obtenue à l'aide de traitements modificateurs qui permettent d'ajuster à volonté la composition en aluminium et en silicium de sa charpente aluminosilicatée. Sa préparation à été décrite dans la demande de brevet européen EP-A-190949.

Dans la présente invention, nous avons utilisé des zéolithes du type offrétite acide modifiée pour préparer un catalyseur de craquage de charges hydrocarbonées, permettant d'obtenir une qualité améliorée (indices d'octane supérieurs de l'essence) et une production améliorée d'hydrocarbures à 3 et 4 atomes de carbone par molécule et en particulier de propylène, et de butènes et isobutane.

L'offrétite a été décrite précédemment ci-dessus.

Le catalyseur spécifique utilisé dans la présente invention renferme un mélange d'une matrice, d'une zéolithe à structure ouverte et d'une zéolithe de type offrétite. Un tel catalyseur peut être préparé par toutes méthodes bien connues de l'homme du métier comme indiqué plus haut.

Comme également indiqué plus haut, le mélange matrice-zéolithe de structure ouverte employé dans la préparation du catalyseur de la présente invention est généralement un catalyseur classique de craquage selon l'art antérieur (par exemple un catalyseur du commerce). La zéolithe peut être une zéolithe X, bêta, oméga, et plus particulièrement une zéolithe Y, notamment les zéolithes Y ultrastables, enrichies par exemple avec au moins un métal de la famille des terres rares ou les nouvelles zéolithes Y enrichies en silice par des traitements chimiques, appelées LZ210 et décrites notamment dans les brevets US 4.503.023 et 4.534.853, EP. 0.139.291 et 0.124.120 ; la zéolithe type offrétite, décrite ci-dessus que l'on emploie pour fabriquer le catalyseur de l'invention peut alors être considérée comme un additif qui peut être employé tel quel en vu de son mélange avec le catalyseur classique de craquage défini ci-avant ou être préalablement incorporé à une matrice, l'ensemble matrice-offrétite (par exemple) constituant alors l'additif que l'on mélange au catalyseur classique de craquage défini ci-avant, par exemple- après une mise en forme adéquate, par mélange mécanique des grains contenant par exemple l'offrétite et des grains de catalyseur classique de craquage.

Bien que toutes les zéolithes de la famille érionite, notamment l'offrétite, ou la ZSM34, ou les zéolithes AG2, N-O ou ZKU ou encore l'érionite T, puissent convenir pour la présente invention, on a découvert que les catalyseurs les plus performants pour la production sélective de propylène contenaient des offrétites fortement enrichies en silice. Plus précisémment ces offrétites ont les caractéristiques suivantes :

- rapport molaire $SiO_2/Al_2O_3$ entre 15 et 500 et de préférence supérieur à environ 20 et plus particulièrement entre 20 et 300),
- paramètres cristallins $\vec{a}$ et $\vec{c}$ compris respectivement pour $\vec{a}$ entre environ 1,285 et environ 1,315 nm et de préférence entre environ 1,290 et environ 1,310 nm, pour $\vec{c}$ entre environ 0,748 et environ 0,757 nm,
- teneur en potassium inférieure à 1,5 % en poids et de préférence à 0,5 % en poids, et avec en outre :
- capacité d'adsorption d'azote à 77 K et à un rapport P/Po de 0,19, supérieure à 0,15 $cm^3$ liquide par gramme et de préférence à 0,20 $cm^3$ liquide par gramme,
- capacité d'adsorption du cyclohexane à 25°C et à un rapport P/Po de 0,25, supérieure à 3 et de préférence à 4 % en poids.
- capacité d'adsorption d'eau, à 25°C pour un rapport P/Po de 0,1 inférieure à 15 % et de préférence inférieure à environ 10 % en poids,

et avec de préférence l'existence d'une microporosité secondaire, mesurée par la méthode BJH (définie dans EP N° 190.949), située entre 3 et 5 nm et correspondant à environ 5 à 50 % du volume poreux total de la zéolithe.

La somme des pourcentages en poids des constituants A, B et C contenus dans les catalyseurs est égale dans chaque cas à 100 %.

Dans le cas où la zéolithe de la famille de l'offrétite est ajoutée au catalyseur principal sous forme de particules sphériques séparées de ce dernier mais de même granulométrie que ce dernier, le poids d'offrétite est compris entre 1 et 90 % (de préférence 5 et 60 %) par rapport au poids des dites particules (autres que celles du catalyseur principal).

Les constituants A et B ont été définis précédemment plus haut.

Le constituant C, du catalyseur spécifique selon l'invention est de préférence à base d'au moins une offrétite dont l'ouverture des canaux dodécagonaux principaux est inférieure à 6,8 x $10^{-10}$ m (6,8 Angströms), (constituant C).

Les exemples suivants illustrent la présente invention sans en limiter la portée.

<u>EXEMPLE 1</u> (Comparatif) : Préparation d'une offrétite base catalytique non conforme à l'invention.

200 g d'une offrétite synthétique dont l'ouverture des canaux dodécagonaux principaux est de 6,4x$10^{-10}$ m (W. MEIER et D.H. OLSON, Atlas of Zeolite Structure Types, 1978.) de rapport molaire $SiO_2/Al_2O_3$ égal à 8 contenant 9,9 % en poids de potassium et 2,8 % en poids d'ions tétraméthylammonium ont été calcinés sous un mélange de 80 % d'azote et 20 % d'air, à un débit de 3 l/h/g, pendant 2 heures à 550°C, pour éliminer les cations $TMA^+$.

Le produit obtenu (référencé P) a ensuite été échangé trois fois par une solution 2 M de nitrate d'ammonium, à 100°C pendant 4 heures, sous agitation, avec un rapport volume de solution sur poids de solide sec (V/P) égal à 5 $cm^3g^{-1}$..

Le solide obtenu référencé 1A contient 2,8% en poids de sodium et son rapport molaire $SiO_2/Al_2O_3$ est de 8 ; ses caractéristiques structurales sont données dans le tableau 2 ci-après. Le solide 1A est appelé produit 1. Le diagramme de diffraction du produit 1 ($NH_4$-offrétite) est présenté dans le tableau 1 ci-après.

L'ouverture des canaux dodécagonaux principaux de l'offrétite n'a pas été modifiée par les traitements.

TABLEAU 1

Diagramme de diffraction X du produit 1. (1A)

| 2 thêta | d (nm) | Intensité | 2 thêta | d (nm) | Intensité |
|---|---|---|---|---|---|
| 7,70 | 1,145 | 66 | 28,10 | 0,317 | 10 |
| 11,75 | 0,752 | 7 | 28,40 | 0,314 | 24 |
| 13,40 | 0,661 | 37 | 30,55 | 0,292 | 5 |
| 14,10 | 0,628 | 7 | 31,25 | 0,286 | 62 |
| 15,50 | 0,572 | 18 | 31,50 | 0,284 | 59 |
| 17,85 | 0,496 | 2 | 33,50 | 0,267 | 24 |
| 19,50 | 0,455 | 26 | | | |
| 20,50 | 0,433 | 54 | | | |
| 23,31 | 0,382 | 31 | | | |
| 23,70 | 0,375 | 100 | | | |
| 24,90 | 0,357 | 66 | | | |
| 26,20 | 0,340 | < 1 | | | |
| 27,00 | 0,330 | 23 | | | |
| 27,30 | 0,327 | 7 | | | |

EXEMPLE 2: Préparation d'une offrétite base catalytique de rapport molaire $SiO_2/Al_2/O_3$ égal à 25 conforme à l'invention. (2F ou produit 2)

Sur l'offrétite 1A obtenue à l'exemple 1 contenant 2,8 % en poids de potassium, on a effectué les opérations suivantes :

Premier cycle : - Self-steaming à 550°C pendant 2 heures (obtention du produit 2A),
- 2 échanges cationiques successifs par $NH_4NO_3$ 2M à 100° C pendant 4 heures sous agitation avec un rapport volume de solution sur poids de solide sec (V/P) égal à 5 $cm^3g^{-1}$. (obtention du produit 2B).

Deuxième cycle : - Self-steaming à 650°C pendant 2 heures (produit 2C),
- Echange cationique par $NH_4NO_3$ 2M dans les conditions décrites pour l'obtention de 2B (obtention du produit 2D),
- 2 attaques acides successives par HCl 0,23 N puis HCl 0,36 N à 100°C pendant 4 heures, avec un rapport V/P égal à 10 (obtention des produits 2E après la première attaque acide et 2F après la deuxième attaque acide).

TABLEAU 2

| | | 1A | 2A | 2B | 2C | 2D | 2E | 2F |
|---|---|---|---|---|---|---|---|---|
| $SiO_2/Al_2O_3$ (mol) | | 8 | | | | | 10 | 25 |
| DIFFRACTION X | S raies$(10^3)$ | 277 | 303 | 323 | 298 | 274 | 290,5 | 285 |
| | S fond $(10_3)$ | 203 | 193 | 209 | 240 | 256,5 | 269 | 256 |
| | S raies/(%) S totale | 58 | 61 | 61 | 55 | 52 | 52 | 53 |
| | Cristallinité(%) | 100 | 105 | 105 | 95 | 90 | 90 | 91 |
| | Paramètres (Angströms) $\vec{a}$ | 13,22 | 13,10 | 13,16 | 13,02 | 13,02 | 13,01 | 13,03 |
| | $\vec{c}$ | 7,52 | 7,50 | 7,51 | 7,51 | 7,51 | 7,51 | 7,52 |

(1 Angström = $10^{-10}$ m).

A l'issue de ces divers traitements, la cristallinité du produit 2F reste toujours excellente (ses caractéristiques structurales et son diagramme de diffraction sont présentés dans les tableaux 2 et 3), sa teneur en potassium est de 0,7 % en poids, son rapport $SiO_2/Al_2O_3$ est égal à 25, et sa capacité d'adsorption d'eau est de 15 % (P/Po = 0,1). Le solide 2F est appelé produit 2. L'ouverture des canaux dodécagonaux principaux n'a pas été modifiée par les traitements.

TABLEAU 3

Diagramme de diffraction X du produit 2.

| 2 thêta | d (nm) | Intensité | 2 thêta | d (nm) | Intensité |
|---|---|---|---|---|---|
| 7,85 | 1,13 | 80 | 24,0 | 0,371 | 44 |
| 11,80 | 0,751 | 7 | 24,95 | 0,356 | 47 |
| 13,60 | 0,650 | 100 | 27,40 | 0,325 | 27 |
| 14,15 | 0,625 | 43 | 28,50 | 0,313 | 20 |
| 15,70 | 0,564 | 33 | 30,95 | 0,289 | 14 |
| 18,00 | 0,492 | 2 | 31,70 | 0,282 | 71 |
| 19,70 | 0,451 | 16 | 33,90 | 0,264 | 22 |
| 20,85 | 0,426 | 57 | | | |
| 23,70 | 0,375 | 29 | | | |

EXEMPLE 3 : Préparation d'une offrétite, base catalytique conforme à l'invention.

Sur l'offrétite appelée produit 2 (ou 2F) obtenue à l'exemple 2 de rapport molaire silice sur alumine de 25, on a effectué les opérations suivantes :

- Self-steaming à 750°C pendant 2 heures (obtention du produit 3 A),
- Echange cationique par $NH_4NO_3$ 2M dans les conditions décrites dans l'exemple 1 (produit 3 B).
- 1 attaque acide par HCl 0,61 N (V/P = 15) à 100°C pendant 4 heures (produit 3 C).

Le produit solide 3 C ainsi obtenu de rapport molaire $SiO_2/Al_2O_3$ de 67 présente une excellente cristallinité (ses caractéristiques structurales et son diagramme de deffraction sont présentés dans les tableaux 4 et 5). Sa teneur en potassium est de 0,3 % poids, sa capacité d'adsorption d'eau est de 5 % à un rapport P/Po de 0,1, et il présente une microporosité secondaire à des diamètres compris entre 20 et 60 Angströms (20 et $60x10^{-10}$ m) correspondant à 0,10 $cm^3/g$ pour un volume poreux total mesuré à un rapport P/Po de 0,9 de 0.38 $cm^3/g$. Ce solide 3C est appelé produit 3. L'ouverture des canaux dodécagonaux principaux n'a pas été modifiée par les traitements.

TABLEAU 4.

| | Produits | 1 ou 1A | 2 ou 2F | 3A | 3B | 3C |
|---|---|---|---|---|---|---|
| | $SiO_2/Al_2O_3$ (mol.) | 8 | 25 | | | 67,2 |
| DIFFRACTION X | S raies ($10^3$) | 277 | 285 | 306 | 316 | 330 |
| | S fond ($10^3$) | 203 | 256 | 248 | 255 | 259 |
| | S raies/S totale (%) | 58 | 53 | 55 | 55 | 56 |
| | Cristallinité (%) | 100 | 91 | 95 | 95 | 97 |
| | Paramètres $\vec{a}$ (Angströms) | 13,22 | 13,03 | 12,93 | 12,93 | 12,93 |
| | $\vec{c}$ | 7,52 | 7,52 | 7,51 | 7,53 | 7,53 |

(1 Angström = $10^{-10}$ m).

TABLEAU 5

Diagramme de diffraction X du produit 3 (ou 3C)

| 2 thêta | d nm | Intensité | 2 thêta | d nm | Intensité |
|---|---|---|---|---|---|
| 7,90 | 1,12 | 100 | 31,85 | 0,281 | 40 |
| 11,80 | 0,751 | 5 | 34,10 | 0,2625 | 13 |
| 13,70 | 0,645 | 90 | | | |
| 14,20 | 0,624 | 39 | | | |
| 15,85 | 0,559 | 20 | | | |
| 18,10 | 0,490 | 1 | | | |
| 19,75 | 0,449 | 15 | | | |
| 21,00 | 0,423 | 36 | | | |
| 23,90 | 0,372 | 18 | | | |
| 24,15 | 0,368 | 22 | | | |
| 24,95 | 0,356 | 25 | | | |
| 27,55 | 0,323 | 15 | | | |
| 28,55 | 0,312 | 9 | | | |
| 31,10 | 0,287 | 7 | | | |

EXEMPLE 4: Préparation des additifs de craquage à base d'offrétite préparée dans les exemples précédents.

Les divers produits 1 (ou 1A), 2 (ou 2F) et 3 (ou 3C) sont respectivement dilués à raison de 30 % en poids, dans une silice amorphe de granulométrie comparable à celle des offrétites utilisées.

Les divers additifs catalytiques ainsi obtenus sont pastillés puis réduits en petits agrégats à l'aide d'une machine à concasser. La fraction comprise entre 40 micromètres et 200 micromètres est ensuite recueillie par tamisage. Ces additifs sont appelés respectivement additifs offrétite 1, 2 et 3, en abrégé AO1, AO2 et AO3.

EXEMPLE 5 (exemple comparatif): Préparation d'une additif de craquage à base de zéolithe ZSM5 (exemple comparatif) appelé additif ZSM5.

Une zéolithe ZSM5 de rapport $SiO_2/Al_2O_3$ = 60 a été synthétisée selon la technique décrite par ARGAUER et al. dans le brevet US 3.702.886. Après une calcination contrôlée, sous air, à 550°C pour éliminer la totalité des ions tétrapropylammonium, cette zéolithe est mélangée à la silice amorphe (identique à celle utilisée dans l'exemple 4), à raison de 30 % en poids de zéolithe, puis le solide résultant est pastillé, concassé et tamisé comme précédemment (exemple 4). L'additif ainsi obtenu est appelé additif ZSM5, en abrégé AZ4.

EXEMPLE 6 (exemple comparatif) : Préparation d'un additif de craquage à base de zéolithe mordénite (exemple comparatif) appelé additif mordénite.

900 grammes de mordénite sodique, (zéolon 900 Na) en extrudés de 1,587 mm (1/16ème de pouce) commercialisée par la société américaine NORTON, sont soumis à deux échanges ioniques dans une solution de nitrate d'ammonium dans les conditions suivantes :
volume de solution : 3,6 litres
concentration de la solution en $NO_3NH_4$ : 2 M
durée de l'échange : 1 heure
température de l'échange : T = 90°C.

Après chaque échange, le solide est lavé dans 1,8 litre d'eau distillée pendant 20 minutes à 20°C.

A la fin de ces opérations, le produit est séché à 120°C dans une étuve pendant 3 heures. Le solide ainsi obtenu est calciné pendant 2 heures à 550°C sous un débit de 180 litres par heure d'un air humide contenant 50 % en volume de vapeur d'eau.

La mordénite, forme hydrogène ainsi obtenue est plongée dans 9 litres d'une solution 0,6M en acide chlorhydrique et est traitée pendant 2 heures à 90°C dans cette solution. Après un lavage de 10 minutes dans 5,4 litres d'eau distillée, puis filtration, le produit est séché à 120°C pendant 2 heures. La mordénite obtenue est soumise à celles décrites ci-avant, sauf en ce qui concerne la température qui est portée à 600°C.

Le solide obtenu est plongé dans 3,6 litres d'une solution aqueuse normale en acide chlorhydrique et est traité pendant 2 heures à 90°C dans cette solution. Après un lavage de 10 minutes dans 3,6 litres d'eau distillée à 20°C, le solide est séché à 120°C pendant 2 heures.

Ce solide est ensite soumis à une calcination sous air humide dans des conditions comparables à celles décrites précédement, sauf en ce qui concerne la température qui est portée à 650°C.

Le solide calciné est plongé dans 1,8 litre d'une solution aqueuse 2N en acide chlorhydrique et est traité pendant 2 heures à 90°C dans cette solution. Il est ensuite lavé dans 5,4 litres d'eau distillée, filtré et séché à 120°C pendant 2 heures . Les deux caractéristiques essentielles de la mordénite acide obtenue sont :
rapport molaire global $SiO_2/Al_2O_3$ = 58,6
% poids de sodium résiduel = 0,09.

Ce produit est dilué à raison de 30 % en poids dans de la silice amorphe (identique à celle utilisée dans l'exemple 4) puis pastillé, concassé et tamisé comme précédemment (exemple 4). L'additif ainsi obtenu est appelé additif mordénite, en abrégé AM5.

EXEMPLE 7: Préparations des catalyseurs de craquages comparatifs et conformes à l'invention et conditions de tests catalytiques de ces catalyseurs.

Les divers additifs obtenus dans les exemples 4 à 6 sont mélangés mécaniquement de façon classique à raison de 20 % en poids à un catalyseur industrial neuf de craquage catalytique appelé en abrégé CAT. Le catalyseur CAT contient une matrice de silice-alumine et 30 % en poids d'une zéolithe Y ultrastabilisée (USY) de paramètre cristallin $\vec{a}$ de 2,45 nm, dont l'ouverture des canaux dodécagonaux principaux est de $7{,}4 \times 10^{-10}$ m (W. MEIER et D. HOLSON, Atlas of Zeolite Structure Types 1978). Ce catalyseur (CAT) a été préablement calciné 6 heures à 750°C en présence de 100 % de vapeur d'eau.

Chacun des catalyseurs obtenus est ensuite introduit dans le réacteur d'une micro-unité de test catalytique MAT. L'aptitude de chaque catalyseur à convertir une charge lourde d'hydrocarbures est ensuite déterminée dans les conditions suivantes :
quantité de catalyseur = 6 g
rapport pondéral catalyseur/charge = C/O = 6
durée de l'injection de la charge = 40 secondes
WHSV = vitesse spatiale massique = 15 $h^{-1}$
température= 510°C.

La charge utilisée a les caractéristiques suivantes :
densité 15°C = 0,929
% Poids S = 0,155
% poids N = 0,1
Carbone Conradson % = 3,8
Ni + V = 5 ppm
Viscosité 60°C (cst) = 45,2
$I_R$ (60°C) = 1,5061 (indice de réfraction de la charge)
Saturés = 45,5 % poids
Oléfines = 1,5 % poids
Aromatiques = 42,7 % poids
Résines = 9,8 % poids
Asphaltènes (insoluble au C5) = 3,1 % poids.

- Comparaison des performances catalytiques.

Les résultats sont exprimés de la manière suivante :
- Conversion de la charge en % poids
- rendement en gaz en % poids ($H_2$ + hydrocarbures de $C_1$ à $C_4$)
- répartition des gaz en % poids ($H_2$ + hydrocarbures de $C_1$ à $C_4$)
- rendement en essence en % poids $C_5$ à 220°C
- rendement en LCO (distillats moyens : 220 - 380°C) en % poids
- rendement en coke en % poids.

Les résultats obtenus avec les divers catalyseurs et le catalyseur industriel de craquage sont reassemblés dans le tableau 6 ci-après

TABLEAU 6.

| CATALYSEURS | CAT* | CAT + A01* | CAT + A02 | CAT + A03 | CAT + AZ4* à base de ZSM5 | CAT + AM5* à base de mordénite |
|---|---|---|---|---|---|---|
| Conversion | 67,7 | 67,3 | 69,4 | 69,8 | 65,7 | 65,0 |
| Gaz total | 19,4 | 20,4 | 23,9 | 25,0 | 20,3 | 20,1 |
| Essence | 40,5 | 39,1 | 37,6 | 37,2 | 37,9 | 37,0 |
| LCO | 20,7 | 19,0 | 18,9 | 18,8 | 20,1 | 20,7 |
| Coke | 7,8 | 7,8 | 7,9 | 7,6 | 7,5 | 7,9 |
| $H_2$ | 0,06 | 0,05 | 0,05 | 0,05 | 0,06 | 0,06 |
| $C_1 + C_2$ | 1,7 | 1,7 | 1,8 | 1,6 | 1,9 | 1,7 |
| $C_3$ saturé | 1,4 | 1,8 | 2,7 | 2,8 | 2,1 | 1,7 |
| $C_3$ insaturé | 5,2 | 6,0 | 7,9 | 9,1 | 6,1 | 5,9 |
| $C_4$ saturé | 5,3 | 5,2 | 5,6 | 5,5 | 4,9 | 5,1 |
| $C_4$ insaturé | 5,7 | 5,6 | 5,9 | 5,9 | 5,3 | 5,7 |

* Exemples de comparaison.

Ces résultats montrent que les catalyseurs contenant les additifs offrétite A02 et A03 préparés à partir des offrétites désaluminées de rapport $SiO_2/Al_2O_3$ respectivement égaux à 25 et 67 et ayant les autres caractéristiques selon l'invention permettent d'obtenir des rendements en propylène nettement améliorés par rapport à une catalyseur classique de craquage CAT et également par rapport aux catalyseurs contenant les additifs AZ5 renfermant la zéolithe ZSM5 ou AM5 renfermant une mordénite non conformes à l'invention.

EXEMPLE 8: Préparation d'une offrétite OFF1 de rapport $SiO_2/Al_2O_3$ molaire égale à 52.

On part du produit 1A non conforme à l'invention préparé à l'exemple 1.

Le solide 1A est soumis aus traitements successifs suivants :
- self-steaming à 550°C pendant 2 heures (obtention du produit 2A),
- 2 échanges cationiques successifs dans un solution de $NH_4$ $NO_3$ 2M, à 100°C pendant 4 heures sous

agitation avec rapport volume de solution sur poids de solide sec (V/P) égal à 5 $cm^3$ $g^{-1}$, (obtention du produit 2B),
- self-steaming à 650°C pendant 2 heures, (obtention du produit 2C),
- $NH_4NO_3$ 2M à 100°C pendant 4 heures agitation avec un rapport volume de solution sur poids de solide sec (V/P) égal à 5 $cm^3g^{-1}$, (obtention du produit 2D),
- 1 attaque acide dans HC1 1N à 100°C pendant 2 heures avec un rapport volume de solution sur poids de solide sec égal à 15 $cm^3$ $g^{-1}$.

On aboutit alors à un solide référencé OFF1, dont les caractéristiques sont les suivantes :

| | |
|---|---|
| $(SiO_2/Al_2O_3)$mole | 52 |
| % K | 0.13 % poids |
| paramètres cristallins $\vec{a}$ | 13.01 Angstroems |
| paramètres cristallins $\vec{c}$ | 7.53 Angstroems |
| cristallinité (DX) | 91 % |
| Volume microporeux N2 | 0.28 cm3 $g^{-1}$ |
| Capacité d'adsorption d'eau (% pds) | 3 % |
| Capacité d'adsorption de cyclohexane.(% pds) | 7.1 % |

Comme l'indiquent les caractéristiques précédentes, le solide OFF1 est une offrétite désaluminée de rapport $SiO_2/Al_2O_3$, égal à 52, bien cristallisée, à très faible teneur résiduelle en potassium et dont le volume microporeux est élevé.

EXEMPLE 9: Préparation d'une offrétite OFF2 de rapport $SiO_2/Al_2O_3$ molaire égal à 105.

On utilise comme base de départ le produit référencé OFF1 de l'exemple 8. Ce produit est soumis aux traitements suivants :
- self steaming à 750°C pendant 2 heures,
- attaque acide dans HCl 3N à 100°C pendant 4 heures avec un rapport volume de solution sur poids de solide sec (V/P) égal à 15 $cm^3$ $g^{-1}$.

On aboutit au solide référencé OFF2, qui possède les caractéristiques suivantes :

| | |
|---|---|
| $SiO_2/Al_2O_3)$ | 103 |
| % K | 0.04 % poids |
| paramètres cristallins $\vec{a}$ | 12.97 Angstroems |
| paramètres cristallins $\vec{c}$ | 7.54 Angstroems |
| Cristallinité (DX) | 87 % |
| Volume microporeux $N_2$ | 0.27 $cm^3g^{-1}$ |
| Capacité d'adsorption d'eau (% pds) | 1.1 % |
| Capacité d'adsorption de cyclohexane | 6.8 % |

Comme le solide OFF1, OFF2 est une offrétite très désaluminée, de rapport molaire $SiO_2/Al_2O_3$ = 105, bien cristallisée, à faible teneur résiduelle en potassium et dont le volume microporeux est élevé.

EXEMPLE 10(non conforme à l'invention) : craquage réalisé sur un catalyseur équilibré industriel de référence (Cat E).

Un essai de craquage catalytique est réalisé à partir d'une charge d'hydrocarbures dont les caractéristiques sont présentées dans le tableau 7. Le catalyseur industriel équilibré utilisé (appelé Cat E), renferme 70 % d'une matrice conventionnelle à base d'une silice alumine riche en silice et de kaolin et renferme 30 % d'une zéolithe Y ultrastable USY. Il a les caractéristiques suivantes :
surface en $m^2.g^{-1}$ = 110
oxyde de terres rares en % poids = 1,6
$Na_2O$ % pds = 0,3
V (ppm) = 4800
Ni (ppm) = 2800
Fe (ppm) = 10200.

Ce catalyseur Cat E est placé dans le réacteur d'une micro-unité de test (appelée aussi unité MAT "Microactivity Test Unit") et mis en contact de la charge d'hydrocarbures dans les conditions de test suivantes :
T = 520°C
C/O = 5 à 6.5(*)
quantité de catalyseur : 5 g
durée de l'injection : 40 secondes.

Les indices d'octanes recherche et moteur de l'essence légères et de l'essence lourde sont calculés à partir des analyses chromatographiques détaillées de l'effluent liquid $C_5^+$ recueillis à la sortie du réacteur à l'issue du test catalytique.

(*) Dans tous les exemples qui suivront, la valeur du rapport C/O sera calculée en ne prenant en compte que le catalyseur de référence et donc sans tenir compte de la présence éventuelle d'un additif (à base d'offretite). En d'autres termes : C = poids en gramme du catalyseur de référence Cat E.

Les résultats sont présentés dans le tableau 8.

TABLEAU 7

| Caractéristiques de la charge lourde utilisée | |
|---|---|
| Densité (20°C) | 0,968 |
| Viscosité (solide à 60°C) | |
| (80°C) | 119,8 |
| cST ($10^{-2}.cm^2.s^{-1}$) (100°C) | 52,2 |
| Conradson % poids | 5,1 |
| Na ppm | 2 |
| Ni ppm | 12 |
| V ppm | 1 |
| C % poids | 86,9 |
| H % poids | 12,2 |
| N % poids | 0,35 |
| S % poids | 0,21 |
| N basique % poids | 0,055 |
| C aromatique % poids | 22,3 |
| H aromatique % poids | 2,7 |
| Distillation simulée (°C) | |
| 5 % poids | 367 |
| 10 % poids | 399 |
| 20 % poids | 436 |
| 40 % poids | 495 |
| 60 % poids | 575 |
| FBP | 575. |

TABLEAU 8

| Catalyseur | Cat E | | |
|---|---|---|---|
| n° essai | 1 | 2 | 3 |
| C/O* | 5,0 | 5,5 | 6,5 |
| (% poids) | | | |
| Conversion | 62,36 | 69,69 | 73,60 |
| C1-C4 | 12,75 | 16,63 | 17,98 |
| Ess (C5-150) | 30,22 | 33,39 | 32,93 |
| Ess (150-221) | 11,13 | 11,63 | 10,49 |
| Essence totale | 41,35 | 45,02 | 43,42 |
| LCO (221-350) | 15,68 | 14,45 | 12,50 |
| Slurry ($350^+$) | 21,97 | 15,86 | 13,90 |
| Coke | 7,75 | 7,54 | 11,67 |
| H2 | 0,51 | 0,50 | 0,54 |
| C1 | 0,57 | 0,66 | 0,68 |
| C2 | 0,45 | 0,47 | 0,49 |
| $C2^=$ | 0,60 | 0,77 | 0,84 |
| C2 totaux | 1,05 | 1,24 | 1,33 |
| C3 | 0,63 | 1,02 | 1,18 |
| $C3^=$ | 3,20 | 3,82 | 4,10 |
| C3 totaux | 3,83 | 4,84 | 5,28 |
| iC4 | 1,56 | 2,92 | 3,36 |
| nC4 | 0,49 | 0,85 | 0,98 |
| $iC4^=$ | 1,77 | 1,94 | 2,03 |
| $nC4^=$ | 3,47 | 4,17 | 4,32 |
| C4 totaux | 7,29 | 9,88 | 10,69 |
| RON ess légère | 92,4 | 92,8 | 93,3 |
| RON ess lourde | 88,6 | 88,9 | 89,4 |
| MON ess légère | 77,9 | 78,3 | 78,5 |
| MON ess lourde | 79,2 | 79,5 | 79,9 |

dans C/O, C = poids du catalyseur Cat E.

EXEMPLE 11: Préparation des additifs de craquage à base d'offrétite préparée dans les exemples précédents.

Les deux pruduits OFF1 et OFF2 obtenus dans les exemples 8 et 9 sont respectivement dilués à raison de 30 % en poids, dans une silice amorphe de granulométrie comparable à celle des offrétites utilisées.
Les deux additifs catalytiques ainsi obtenus sont pastillés puis réduits en petits agrégats à l'aide d'une machine à concasser. La fraction comprise entre 40 micromètres et 200 micromètres est ensuite recueillie par tamisage. Ces deux additifs obtenus sont mélangés mécaniquement de façon classique à raison de 6.7 % ou 16,7 % en poids au catalyseur industriel équilibré de craquage catalytique appelé en abrégé Cat E. Les catalyseurs qui résultent de ces mélanges contiennent ainsi respectivement 2 % en poids ou 5 % en poids des offrétites OFF1 ou OFF2.

EXEMPLE 12 (conforme à l'invention) :

Deux catalyseurs constitués des mélanges mécaniques suivants du catalyseur Cat E précédent et de l'additif conentant l'offrétite OFF 1 ($SiO_2/Al_2O_3$ = 52) sont étudiés dans les mêmes conditions et avec la même charge que précédement (exemple 10) :
Cat E + 2 % pds OFF1 et Cat E + 5 % pds OFF1.
Les résultats obtenus sont présentés dans le tableau 9 (*).
(*) Rappelons que pour tous ces résultats, la valeur C de C/O est égale au poids du catalyseur de référence Cat E.
Ils mettent en évidence les principaux points suivants :
. dans tous les cas les rendements propylène sont très nettement améliorés,
. dans tous les cas les indices d'octane recherche et moteur sont nettement améliorés,
. dans tous les cas, les rendements en essence, gazole léger (LCO) et fraction lourde HCO + slurry sont plus faibles,
. dans l'essai 4 de l'exemple 12 (tableau 9), les différences d'indice d'octane et de rendement en essence par rapport à l'essai 1 de l'exemple 8 précédent sont :
Rdt essence = −3,89
RON essence légère = + 1,8
RON essence lourde = + 8,9
MON essence légère = + 3,6
MON essence lourde = + 5,2
Rdt propylène = + 3,31 (soit 3,31/3,20 = 103 %)
Rdt isobutane = + 2,40 (soit 2,40/1,56 = 154 %)
Rdt n butènes = + 2,0 (soit 2/3,47 = 58 %).
Ces exemples montrent que l'addition de faibles quantités d'offrétite ou catalyseur conventionnel de craquage permet d'améliorer nettement la qualité de l'essence et la production de propylène et d'isobutane et. à un degré moindre, de butènes normaux.

EXEMPLE 13 (conforme à l'invention)

Un nouveau catalyseur constitué du mélange suivant du catalyseur Cat E précédent et de l'additif contenant de l'offrétite OFF2 ($SiO_2/Al_2O_3$ = 105) est étudié dans les mêmes conditions et avec la même charge que précédemment (exemples 3 et 5) :
CAT E + 5 % pds OFF2

TABLEAU 9

| Catalyseur | Cat E+ | | | | |
|---|---|---|---|---|---|
| | 2 % pds OFF1 | | 5 % pds OFF1 | | |
| n° essai | 4 | 5 | 6 | 7 | 8 |
| C/O (*) | 5,0 | 5,4 | 4 | 4,8 | 5,5 |
| (% poids) | | | | | |
| Conversion | 68,89 | 71,36 | 60,99 | 68,47 | 73,10 |
| C1-C4 | 23,29 | 26,08 | 23,91 | 27,62 | 33,26 |
| Ess (C5-150) | 28,41 | 27,56 | 24,01 | 24,63 | 23,07 |
| Ess (150-221) | 9,04 | 9,00 | 6,26 | 7,03 | 6,19 |
| Essence totale | 37,46 | 36,56 | 30,27 | 31,66 | 29,27 |
| LCO (221-350) | 13,38 | 12,01 | 11,26 | 11,90 | 10,87 |
| Slurry ($350^+$) | 17,73 | 16,18 | 27,76 | 19,64 | 16,03 |
| Coke | 7,75 | 8,73 | 6,47 | 8,81 | 10,11 |
| H2 | 0,39 | 0,45 | 0,34 | 0,39 | 0,47 |
| C1 | 0,54 | 0,57 | 0,43 | 0,56 | 0,56 |
| C2 | 0,40 | 0,41 | 0,35 | 0,41 | 0,45 |
| $C2^=$ | 1,04 | 1,23 | 0,99 | 1,48 | 2,00 |
| C2 totaux | 1,44 | 1,64 | 1,35 | 1,88 | 2,46 |
| C3 | 1,48 | 1,96 | 1,46 | 2,11 | 3,37 |
| $C3^=$ | 6,51 | 7,21 | 6,20 | 7,37 | 8,53 |
| C3 totaux | 7,99 | 9,17 | 7,65 | 9,48 | 11,90 |
| iC4 | 3,96 | 4,54 | 3,33 | 4,79 | 5,80 |
| nC4 | 1,12 | 1,32 | 1,06 | 1,41 | 2,04 |
| $iC4^=$ | 2,78 | 3,02 | 4,25 | 3,78 | 4,16 |
| $nC4^=$ | 5,46 | 5,82 | 5,84 | 5,72 | 6,35 |
| C4 totaux | 13,32 | 14,70 | 14,48 | 15,70 | 18,35 |
| RON ess légère | 94,2 | 95,6 | 96,0 | 97,5 | 98,5 |
| RON ess lourde | 97,5 | 98,2 | 93,4 | 98,8 | 99,1 |
| MON ess légère | 81,5 | 82,1 | 80,8 | 82,3 | 82,1 |
| MON ess lourde | 84,4 | 85,5 | 82,2 | 85,7 | 85,6 |

(*) dans C/O, C est égal au poids du catalyseur Cat E de référence.

Les résultats obtenus sont présentés dans le tableau 10.

Comparée à l'exemple précédent n° 11, l'illustration d'une offrétite OFF2 fortement désaluminée de rapport atomique Si/Al = 52,5 très supérieur à celui de l'offrétite OFF1, se traduit par une activité moins élevée (conversion 65,49 au lieu de 68,5-69 environ), une production de propylène plus faible (4,79 au lieu de 6,5 à 7 % environ), un production d'isobutane plus faible (3,14 au lieu de 4 à 4,5 environ), un production d'essence plus importante mais avec des indices d'octane recherche et moteur plus faibles. Néanmoins, quand on les compare à ceux de l'exemple 10, ces résultats démontrent encore clairement l'intrérêt de cette offrétite pour améliorer la production de propylène, d'isobutane et de butènes et pour améliorer les indices d'octane recherche et moteur de l'essence.

Rappelons ici encore que pour ces résultats, la valeur C du rapport C/O est égale au poids du catalyseur de référence Cat E.

TABLEAU 10

| Catalyseur | Cat E + 5 % OFF2 |
|---|---|
| n° essai | 9 |
| C/O (*) (% poids) | 4,9 |
| Conversion | 65,49 |
| C1-C4 | 18,93 |
| Ess (C5-150) | 28,92 |
| Ess (150-221) | 9,72 |
| Essence totale | 38,64 |
| LCO (221-350) | 13,91 |
| Slurry ($350^+$) | 20,37 |
| Coke | 7,92 |
| H2 | 0,51 |
| C1 | 0,65 |
| C2 | 0,49 |
| $C2^=$ | 1,09 |
| C2 totaux | 1,58 |
| C3 | 1,09 |
| $C3^=$ | 4,79 |
| C3 totaux | 5,88 |
| iC4 | 3,14 |
| nC4 | 0,87 |
| $iC4^=$ | 2,12 |
| $nC4^=$ | 4,69 |
| C4 totaux | 10,82 |
| RON ess légère | 94,1 |
| RON ess lourde | 93,8 |
| MON ess légère | 79,9 |
| MON ess lourde | 82,1 |

(*) dans C/O, c'est égal au poids du catalyseur cat E de référence.

## Revendications

1. Catalyseur renfermant:

a) de 20 à 95% en poids d'au moins une matrice [constituant A], choisie dans le groupe constitué par l'alumine, la silice, la magnésie, l'argile, l'oxyde de titane, la zircone, les combinaisons de deux au moins de ces composés et les combinaisons alumine-oxyde de bore,

b) de 1 à 60% en poids d'au moins une zéolithe [constituant B] de structure ouverte, autre que l'offrétite, dont l'ouverture des canaux dodécagonaux principaux est d'au moins $7 \times 10^{-10}$ m, ladite zéolithe de structure ouverte est choisie dans le groupe formé par les zéolithes X, Y, L, oméga et bêta,

c) de 0,5 à 60% en poids d'au moins une offrétite stabilisée et désaluminisée [constituant C] dont l'ouverture des canaux dodécagonaux principaux est inférieure à $7 \times 10^{-10}$ m ayant un rapport molaire $SiO_2/Al_2O_3$ de 15 à 500, des paramètres cristallins $\vec{a}$ et $\vec{c}$ de la maille élémentaire respectivement de 1,285 à 1, 315 nm pour $\vec{a}$ et de 0,748 à 0,757 nm pour $\vec{c}$ et une teneur en potassium inférieure à 1,5% en poids.

2. Catalyseur selon la revendication 1 renfermant:

a) de 30 à 80% en poids de matrice,

b) de 4 à 50% en poids de zéolithe de structure ouverte,

c) de 1 à 40% en poids d'offrétite.

3. Catalyseur selon la revendication 2 dans lequel la zéolithe de structure ouverte est une zéolithes Y ultrastable sous forme hydrogène et/ou sous forme au moins partiellement échangée par des cations des métaux du groupe des terres-rares de numéro atomique 57 à 71 inclus.

4. Catalyseur selon l'une des revendications 1 à 3 dans lequel l'offrétite un rapport molaire $SiO_2/Al_2O_3$ de 20 à 400, des paramètres cristallins $\vec{a}$ et $\vec{c}$ de la maille élémentaire respectivement de 1,290 nm à 1,310 nm pour $\vec{a}$ et de 0,750 à 0,755 nm pour $\vec{c}$ et une teneur en potassium inférieure à 1% en poids.

5. Catalyseur selon la revendication 4 dans lequel l'offrétite est une offrétite sous forme hydrogène.

6. Catalyseur selon la revendication 4 dans lequel l'offrétite est une offrétite sous forme au moins partiellement échangée par des cations des métaux du groupe des terres-rares de numéro atomique 57 à 71 inclus.

7. Catalyseur selon l'une des revendications 1 à 6 dans lequel ledit constituant C, du catalyseur est à base d'au moins une offrétite dont l'ouverture des canaux dodécagonaux principaux est inférieure à 6,8 x $10^{-10}$ m, possède un rapport molaire $SiO_2/Al_2O_3$ de 15 à 500, des paramètres cristallins $\vec{a}$ et $\vec{c}$ de la maille élémentaire respectivement d'environ 1,285 à 1,315 nm pour $\vec{a}$ et d'environ 0,748 à 0,757 nm pour $\vec{c}$ ,et une teneur en potassium inférieure à 1,5% en poids, ladite offrétite ayant en outre:

– une capacité d'adsorption d'azote à 77 K et à un rapport P/Po de 0,19, supérieure à 0,15 $cm^3$ liquide par gramme et de préférence à 0,20 $cm^3$ liquide par gramme,

– une capacité d'adsorption du cyclohexane à 25°C et à un rapport P/Po de 0,25, supérieure à 3 et de préférence à 4% en poids,

– et une capacité d'adsorption d'eau, à 25°C pour un rapport P/Po de 0,1 inférieure à 15% et de préférence inférieure à environ 10% en poids.

8. Utilisation d'un catalyseur selon l'une des revendications 1 à 7 dans un procédé de craquage catalytique d'une charge hydrocarbonée.

## Claims

1. A catalyst containing:

a) 20–95% by weight of at least one matrix (constituent A), selected from the group consisting of alumina, silica, magnesia, clay, titanium oxide, zirconia, combinations of at least two of these compounds and alumina-boron oxide combinations,

b) 1–60% by weight of at least one zeolite (constituent B) of open structure whose main dodecagonal channels have openings of at least 7 Angströms, said zeolite of open structure being selected from the group formed of X, Y, L, omega and beta zeolites,

c) 0.5–60% by weight of at least one stabilized and dealuminated offretite (constituent C) whose main dodecagonal channels have openings smaller than 7 Angströms and which have a $SiO_2/Al_2O_3$ molar ratio from 15 to 500, the crystalline parameters $\vec{a}$ and $\vec{c}$ of elementary mesh ranging respectively from 1.285 to 1.315 nm for $\vec{a}$ and from 0.748 to 0.757 nm for $\vec{c}$ and have a potassium content lower than 1.5% by weight.

2. A catalyst according to claim 1, containing:

a) 30–80% by weight of matrix,

b) 4–50% by weight of zeolite of open structure,

c) 1–40% by weight of offretite.

3. A catalyst according to claim 2, wherein the zeolite of open structure is an ultrastable Y zeolite in hydrogen form and/or at least partially exchanged with cations of metals from the rare-earth group having an atomic number from 57 to 71 inclusive.

4. A catalyst according to one of claims 1 to 3, wherein the offretite has a $SiO_2/Al_2O_3$ molar ratio from 20 to 400, crystalline parameters $\vec{a}$ and $\vec{c}$ of elementary mesh respectively from about 1.290 nm to about 1.310 nm for $\vec{a}$ and from 0.750 nm to 0.755 nm for $\vec{c}$ and a potassium content lower thant 1% by weight.

5. A catalyst according to claim 4, wherein offretite is in hydrogen form.

6. A catalyst according to claim 4, wherein offretite is at least partially exchanged with cations of metals from the rare-earth group of atomic number from 57 to 71 inclusive.

7. A catalyst according to one of claims 1 to 6, wherein said constituent (C) of the catalyst essentially consists of at least one offretite whose main dodecagonal channels have openings smaller than 6.8 Angströms and which have a $SiO_2/Al_2O_3$ molar ratio from 15 to 500, crystalline parameters $\vec{a}$ and $\vec{c}$ of the elementary mesh respectively from about 1.285 to 1.315 nm for $\vec{a}$ and about 0.748 to 0.757 nm for $\vec{c}$, and a potassium content lower than 1.5% by weight, said offretite being further characterized by:

– a nitrogen adsorption capacity, at 77K and for a P/Po ratio of 0.19, higher than 0.15 cc liquid per gram and preferably higher than 0.20 cc liquid per gram,

– a cyclohexane adsorption capacity, at 25°C and for a P/Po ratio of 25, higher than 3 and preferably higher than 4% by weight, and

– a water adsorption capacity, at 25°C for a P/Po ratio of 0.1, lower than 15% and preferably lower than about 10% by weight.

8. The use of a catalyst according to one of claims 1 to 7 for the catalytic cracking of a hydrocarbon charge.

## Patentansprüche

1. Katalysator, dadurch gekennzeichnet, daß er besteht aus

a) mindestens 20 bis 95 Gew.-% einer Matrix, (Bestandteil A), ausgewählt unter Aluminium, Silicium, Magnesium, -Titanoxiden, Tonerden, der Kombinationen von mindestens zwei dieser Komponenten und der Kombination von Aluminoxid-Boroxid,

b) mindestens 1 bis 60 Gew.-% eines Zeoliths (Bestandteil B), ausgewählt unter Zeolithen X, Y, L, Omega und Beta, mit offener Struktur, wobei die Öffnung der zwölfflächigen Hauptkanäle mindestens 7 x $10^{-10}$m beträgt,

c) mindestens 0,5 bis 60 Gew.-% eines Offretits (Bestandteil C), dessen Öffnung der zwölfflächigen Hauptkanäle unter 7 x $10^{-10}$m liegt, ein Molverhältnis $SiO_2/Al_2O_3$, zwischen 15 und 500, kristallinische Parameter $\vec{a}$ und $\vec{c}$, mit Elementarzellen zwischen 1,285, und 1,315 nm für $\vec{a}$ bzw. zwischen 0,785 und 0,757 nm für $\vec{c}$ und einen $K^+$-Gehalt unter 1,5 Gew.-% aufweist.

2. Katalysator nach Anspruch 1, dadurch gekennzeichnet, daß er besteht aus

a) 30 bis 80 Gew.-% Matrix

b) 4 bis 50 Gew.-% Zeolith mit offener Struktur

c) 1 bis 40 Gew.-% Offretit.

3. Katalysator nach Anspruch 2, dadurch gekennzeichnet, daß das Zeolith mit offener Struktur ein ultrastabiles Y-Zeolith ist, in Wasserstoff-Form und/oder in einer mindestens partiell, mit Kationen der Gruppe der seltenen Erden, mit Ordnungszahlen zwischen 57 und inklusiv 71, ausgetauschten Form vorliegt.

4. Katalysator nach einem der Ansprüche 1 bis 3, dadurch gekennzeichnet, daß das Offretit ein Molverhältnis $SiO_2/Al_2O_3$ von 20 bis 400, kristallinische Parameter $\vec{a}$ und $\vec{c}$ mit einer Elementarzelle von 1,290 nm bis 1,310 nm für $\vec{a}$ und von 0,750 bis 0,755 nm für $\vec{c}$ und ein K -Gehalt unter 1 Gew.-% aufweist.

5. Katalysator nach Anspruch 4, dadurch gekennzeichnet, daß das Offretit ein Offretit in Wasserstoff-Form ist.

6. Katalysator nach Anspruch 5, dadurch gekennzeichnet, daß das Offretit in einer mindestens partiell mit Kationen der Gruppe der seltenen Erden, mit Ordnungszahlen zwischen 57 und inklusiv 71, ausgetauschten Form vorliegt.

7. Katalysator nach einem der Ansprüche 1 bis 6, dadurch gekennzeichnet, daß der Bestandteil C ein Offretit ist, dessen Öffnung der zwölfflächigen Hauptkanäle unter 6,8 x 10 m liegt, ein Molverhältnis $SiO/Al_2O_3$ von 15 bis 500, kristallinische Parameter $\vec{a}$ und $\vec{c}$ mit Elementarzellen von etwa 1,285 bis 1,315 nm für $\vec{a}$ bzw. etwa 0,748 bis 0,757 nm für $\vec{c}$ und einen K-Gehalt unter 1,5 Gew.-% aufweist und, daß das oben genannte Offretit darüberhinaus

– ein Adsorptionsvermögen für Stickstoff, bei 77 K und einem Verhältnis P/Po von 0,19, höher 0,15 cm Flüssigkeit pro Gramm und bevorzugt 0,20 $cm^3$ Flüssigkeit pro Gramm,

– ein Adsorptionsvermögen für Cyclohexan, bei 25°C und einem Verhältnis P/Po von 0,25, höher 3 und bevorzugt 4 Gew.-%,

– ein Adsorptionsvermögen für Wasser, bei 25°C und einem Verhältnis P/Po von 0,15, unter 15% und bevorzugt unter etwa 10 Gew.-% aufweist.

8. Verwendung des Katalysators nach einem der Ansprüche 1 bis 7 zur katalytischen Crackung einer kohlenwasserstoffhaltigen Fraktion.